# EUROPÄISCHE PATENTSCHRIFT

(11) **EP 1 133 588 B1**
(45) Veröffentlichungstag und Bekanntmachung des Hinweises auf die Patenterteilung: **31.07.2002**
(21) Anmeldenummer: 99963220.1
(22) Anmeldetag: 10.11.1999
(51) Int. Cl.: C25D 7/10, F16C 33/12

(54) **SCHICHTVERBUNDWERKSTOFF FÜR GLEITELEMENTE UND VERFAHREN ZU SEINER HERSTELLUNG**
STRATIFIED COMPOSITE MATERIAL FOR SLIDING ELEMENTS AND METHOD FOR THE PRODUCTION THEREOF
MATERIAU COMPOSITE STRATIFIE POUR ELEMENTS DE GLISSEMENT ET SON PROCEDE DE PRODUCTION

(30) Priorität: 13.11.1998 DE 19852481
(43) Veröffentlichungstag der Anmeldung: 19.09.2001
(73) Patentinhaber: Federal-Mogul Wiesbaden GmbH & Co.KG, 65201 Wiesbaden (DE)
(72) Erfinder: STASCHKO, Klaus, D-65232 Taunusstein-Seitzenhahn (DE); GRUENTHALER, Karl-Heinz, D-61250 Usingen (DE)
(86) Internationale Anmeldenummer: DE9903607
(87) Internationale Veröffentlichungsnummer: WO0029647

(56) Entgegenhaltungen:
- DE-A- 3 430 945
- DE-A- 4 103 117
- US-A- 5 525 203
- US-A- 5 666 644

## Beschreibung

Die Erfindung betrifft ein Verfahren zur Herstellung eines Schichtverbundwerkstoffes für Gleitelemente, bei dem auf eine Trägerschicht eine Lagermetallschicht sowie eine Zwischenschicht aufgebracht wird und auf der Zwischenschicht eine Gleitschicht galvanisch abgeschieden wird. Die Erfindung bezieht sich auch auf einen entsprechenden Schichtverbundwerkstoff für Gleitelemente.

Die bekannten Schichtverbundwerkstoffe bestehen aus einer stabilen Trägerschicht, in der Regel aus Stahl, mit einer aufgegossenen, aufgesinterten oder aufgewalzten Lagermetallschicht, die in der Regel auf der Basis von Kupfer oder Aluminium hergestellt wird, und einer darauf abgeschiedenen Gleitschicht, z.B. einer Blei-Zinn-Kupfer-Legierung. Meistens ist zwischen der Gleitschicht und dem Lagermetall eine Diffusionssperrschicht, z.B. aus Nickel, angeordnet. Solche Schichtverbundwerkstoffe sind beispielsweise aus der DE-PS 830 269 bekannt.

Die Gleitschicht übernimmt multifunktionelle Aufgaben. Sie kann harte abrasiv wirkende Teilchen durch Einbettung unschädlich machen und sie dient während der Einlaufphase der Anpassung an die Welle. Sie übernimmt einen gewissen Korrosionsschutz für das Lagermetall und weist Notlaufeigenschaften bei Ölmangel auf.

Der Lebenszyklus der Gleitschicht besteht aus folgenden Phasen:
- Einlaufphase mit höherem Verschleiß
- Dauerlaufphase mit konstanter niedrigerer Verschleißrate
- Phase nach Erreichen des totalen Schichtverschleißes mit erhöhter Freßempfindlichkeit.

Die Härte der üblichen Gleitschichten ist ein Kompromiß zwischen der Einbettfähigkeit bzw. dem Notlaufverhalten, d.h. geringe Schichthärte, und dem Verschleißwiderstand, d.h. hoher Schichthärte.

Zur Optimierung der Leistungsfähigkeit von Gleitschichten wurde z.B. eine spezielle Struktur entwickelt, die aus alternierenden Schichten eines weicheren Materials mit Schichten eines härteren Materials aufgebaut ist. Eine solche Gleitschicht ist beispielsweise aus der DE 39 36 498 A1 bekannt. Im Galvanikbad wird ein elektrischer Strom einer Dichte von 0 - 80 A/dm² und einem Potential von -1,5 bis +0,5 Volt eingestellt. Aus einem Blei-Zinn-Kupfer-Bad werden alternierende Schichten aus CuSnPb (weiche Schicht) und Cu oder CuSn (harte Schicht) abgeschieden. Die Abscheidung erfolgt durch Änderung der Abscheideparameter aus einem einzigen fluoroborathaltigen Bad.

Diese Schichtanordnung, die bis zu mehreren 100 Schichten umfassen kann, wobei die einzelnen Schichten lediglich eine Dicke von einigen µm aufweisen, hat den gravierenden Nachteil, daß eine Interdiffusion von Kupfer und Zinn auftritt, so daß spröde intermetallische Phasen entstehen, die ungünstige tribologische Eigenschaften aufweisen und außerdem zu Sprödbruch neigen.

Aus der DE 41 03 117 C2 ist ein Verfahren zur Herstellung von Gleitelementen mit einer Gleitschicht aus ternärer oder binärer Weißmetall-Legierung bekannt, das auf der Diffusionsglühung basiert. Dieses Verfahren hat jedoch den Nachteil, daß die Konzentration der weichen Komponente bzw. der harten Komponente nicht beliebig über die Schichtdicke variiert werden kann, weil sich aufgrund des Diffusionsgesetzes immer eine Konzentrationsverteilung entsprechend einer e-Funktion einstellt. Insbesondere bei einer steil abfallenden e-Funktion erhält man im tieferliegenden Gleitschichtbereich überhaupt keine Härteänderung mehr. Ein weiterer Nachteil besteht darin, daß ein weiterer Verfahrensschritt zur Einstellung des Konzentrationsgradienten nach der galvanischen Abscheidung der Gleitschicht erforderlich ist.

Aufgabe der Erfindung ist es, ein Verfahren bereitzustellen, mit dem es möglich ist, einen Schichtverbundwerkstoff zu schaffen, der während seiner gesamten Laufdauer optimale Eigenschaften aufweist.

Die Erfindung geht von der Erkenntnis aus, daß optimale Eigenschaften insbesondere dann vorliegen, wenn die Gleitschicht während der Lebensdauer des aus dem Schichtverbundwerkstoffs gefertigten Gleitelementes immer die optimale Härte besitzt. Dies wird dadurch erreicht, daß bei dem erfindungsgemäßen Schichtverbundwerkstoff die Gleitschicht eine von ihrer Oberfläche in Richtung Lagermetallschicht kontinuierlich zunehmende Härte aufweist.

Die Gleitschicht und somit der erfindungsgemäße Schichtverbundwerkstoff besitzen eine Schichthärte, die an die jeweilige Betriebsphase angepaßt ist: geringe Härte während der Einlaufphase, zunehmende Härte während der Dauerlaufphase, so daß damit insgesamt die Lebensdauer erheblich gesteigert werden kann. Im Gegensatz zu herkömmlichen Gleitschichten konnte die Lebensdauer um den Faktor 1,5 bis 2 erhöht werden.

Eine solche Gleitschicht erfordert ein Verfahren, mit dem die Härte über die Schichtdicke gezielt eingestellt werden kann.

Die Aufgabe wird verfahrensmäßig dadurch gelöst, daB als Gleitschicht eine bleifreie Legierung mit mindestens einer harten und einer weichen Komponente abgeschieden wird, wobei die Stromdichte innerhalb des Bereichs von 0,3 - 20 A/dm2 während des Abscheidevorgangs verändert wird und/oder die Temperatur des Galvanikbades innerhalb des Bereiches von 15°C bis 80°C verändert wird.

Das erfindungsgemäße Verfahren beinhaltet mehrere Alternativen.

Gemäß einer ersten Verfahrensvariante wird mit konstanter Temperatur gearbeitet und die Stromdichte wird während des Abscheidevorganges verändert, vorzugsweise gesteigert. Dies hat zur Folge, daß mit zunehmender Stromdichte die Abscheidung der weichen Komponente bevorzugt wird, was zu einem größeren Anteil der weichen Komponente in der Gleitschicht führt.

Gemäß einer zweiten Verfahrensvariante wird die Stromdichte auf einen bestimmten Wert eingestellt und die Temperatur verändert. Es hat sich herausgestellt, daß eine Korrelation zwischen Temperatur und Abscheideverhalten der harten und weichen Komponente in der Weise besteht, daB mit zunehmender Temperatur die Abscheidung der harten Komponente begünstigt wird. Um den gewünschten Härtegradienten einzustellen, ist es gemäß einer ersten Ausführungsform dieser zweiten Verfahrensvariante erforderlich, während der Abscheidung die Temperatur von einem hohen Wert herunterzufahren. Dies bedeutet, daß das Galvanikbad gekühlt werden muß.

Da anlagetechnisch eine Erwärmung des Galvanikbades einfacher durchführbar ist, wird gemäß einer zweiten Ausfuhrungsform dieser zweiten Verfahrensvariante dem Galvanikbad vorzugsweise ein Polarisator zugesetzt. Es hat sich herausgetellt, daß hierfür ein Zusatz auf der Basis ungesättigter Karbonsäure geeignet ist. Vorzugsweise enthält der Polarisator ca. 30 % Karbonsäure und bis zu einem Drittel Arylpolyglykolether und/oder Alkylpolyglykolether, wobei der Rest aus Wasser besteht. Dieser Zusatz wird vorzugsweise in Mengen bis 10 % bezogen auf die Gesamtmenge des Galvanikbades zugesetzt.

Dieser als Polarisator bezeichnete Zusatz bewirkt eine Veränderung des Potentials der härteren Komponente mit der Folge, daß mit zunehmender Temperatur die Abscheidung der härteren Komponente verringert wird.

Die Verfahrensvarianten können auch miteinander kombiniert werden, indem sowohl die Stromdichte als auch die Tempratur während des Abscheidevorganges verändert werden.

Das Verfahren bietet den Vorteil, daß eine Erzeugung der Schicht mit den jeweiligen Laufeigenschaften durch eine galvanische Abscheidung aus einem einzigen Bad möglich ist. Die Verwendung mehrerer Galvanikbäder z.B. mit unterschiedlicher Temperatur ist nicht ausgeschlossen.

Stromdichte und/oder Temperatur können stufenweise verändert werden, so daß sich eine Schichtstruktur innerhalb der galvanisch abgeschiedenen Gleitschicht einstellt. Es hat sich jedoch gezeigt, daß bezüglich der Laufeigenschaften sprunghafte Änderungen in der Härte nicht immer von Vorteil sind. Es wird daher einer kontinuierlichen Härteänderung, d.h. einem Härtegradienten den Vorzug gegeben. Dementsprechend wird die Stromdichte und/oder die Temperatur vorzugsweise kontinuierlich verändert.

Vorzugsweise wird die Stromdichte mit einer Rate von 0,1 bis 0,5 A/(dm² min) gesteigert.

Die Temperatur wird vorzugsweise mit einer Rate von 1° bis 5°C/min verändert.

Der Stromdichtebereich, der während der Abscheidung durchfahren wird, richtet sich nach der verwendeten Legierung. Wenn eine binäre Legierung aus Zinn und Kupfer abgeschieden wird, wird die Stromdichte vorzugsweise im Bereich von 0,5 - 10 A/dm² verändert. Als binäre Legierungen kommen insbesondere CuAg, AgCu, SnCu, CuSn, SnBi oder SnAg in Frage.

Die Abscheidung wird vorzugsweise aus einem fluoroboratfreien Galvanikbad vorgenommen.

Über das erfindungsgemäße Verfahren ist es möglich, die Härte der Gleitschicht im Bereich von 10 HV bis 150 HV ansteigend einzustellen.

Die Bad-Zusammensetzung ist so gewählt, daß Legierungen hoher und geringer Härte abgeschieden werden können.

Der Anteil der harten Komponente steigt vorzugsweise von der Gleitschichtoberfläche in Richtung Lagermetallschicht von 1 Gew.-% auf 20 Gew.-% an. Die Gleitschichtlegierung kann zusätzlich noch 0,1 Gew.-% bis 5 Gew.-% Nickel und/oder Kobalt enthalten. Dieser Zusatz wirkt diffusionsstabilisierend in den binären Systemen.

Eine Zwischenschicht dient als Diffusionsbarriere, als Haftvermittler und zur Verbesserung der Verschleiß- und Ermüdungsfestigkeiten. Sie besteht vorzugsweise aus Nickel, SnNi, Ni + SnNi (zwei Schichten), Co oder Fe. Der Zinnanteil in der SnNi-Legierungsschicht beträgt vorzugsweise 65 bis 75 %.

Die Zwischenschicht kann ebenfalls galvanisch oder stromlos (autokatalytisch) abgeschieden werden. Die Lagermetallschicht kann gesintert oder gegossen sein.

### Beispiel 1: Gleitschicht SnCu

Es wurden Galvanikschichten auf einem Bleibronzesubstrat mit Nickelzwischenschicht hergestellt.

Die Zusammensetzung konnte im Bereich Zinn mit Kupferanteilen von 1 bis 20% eingestellt werden. Der Kupferanteil nahm kontinuierlich von der Schichtoberfläche zum Lagermetall zu. Der Härteverlauf entsprach diesem Cu-Konzentrationsverlauf und ergab 10 HV (Gleitschichtoberfläche) bis zu 80 HV (Nähe Lagermetall).

Die Schicht wurde aus einem methansulfonsauren Bad mit Zinn- und Kupfermethansulfonat sowie Zusätzen von organischen Netz- und Glättungsmitteln abgeschieden. Die Schichtdicke der Gleitschicht konnte in einem Bereich zwischen 8 und 50 µm eingestellt werden.

Die Erzeugung des Kupferkonzentrationsprofiles gelang durch Abscheidung mit Stromdichten von 3 bis 5 A/dm² mit zusätzlicher Veränderung der Badtemperatur im Bereich von 20°C bis 60°C.

### Beispiel 2: Gleitschicht SnAg

Abscheidung auf Lagermetall CuSn mit Zwischenschicht aus Ni.

Die Gleitschicht wurde aus einem methansulfonsauren Zinn-Silber-Bad mit Silberanteilen von 1 bis 20% abgeschieden.

Der Konzentrationsgradient des Silbers von der Gleitschichtoberfläche zum Lagermetall konnte durch Änderung der Stromdichte von 0,3 bis 10 A/dm² erzeugt werden. Die Härte der Gleitschicht lag zwischen 10 HV (zinnreiche Oberfläche) und bis zu 150 HV (silberreiche Phase).

## Patentansprüche

1. Verfahren zur Herstellung eines Schichtverbundwerkstoffes für Gleitelemente, bei dem auf eine Trägerschicht eine Lagermetallschicht sowie eine Zwischenschicht aufgebracht wird und auf der Zwischenschicht eine Gleitschicht galvanisch abgeschieden wird,
**dadurch gekennzeichnet,**
**daß** als Gleitschicht eine bleifreie Legierung mit mindestens einer harten und einer weichen Komponente abgeschieden wird, wobei die Stromdichte innerhalb des Bereichs von 0,3 bis 20 A/dm² während des Abscheidevorgangs verändert wird und/oder die Temperatur des Galvanikbades innerhalb des Bereiches von 15°C bis 80°C verändert wird.

2. Verfahren nach Anspruch 1, **dadurch gekennzeichnet, daß** die Temperatur nicht verändert wird und daß die Stromdichte erhöht wird.

3. Verfahren nach Anspruch 1, **dadurch gekennzeichnet, daß** die Stromdichte nicht verändert wird und daß die Temperatur erniedrigt wird.

4. Verfahren nach Anspruch 1, **dadurch gekennzeichnet, daß** dem Galvanikbad ein Polarisator zugesetzt wird,
daß die Stromdichte nicht verändert wird und daß die Temperatur erhöht wird.

5. Verfahren nach Anspruch 4, **dadurch gekennzeichnet, daß** ein Polarisator auf der Basis ungesättigter Karbonsäure zugesetzt wird.

6. Verfahren nach Anspruch 4 oder 5, **dadurch gekennzeichnet, daß** der Polarisator in einer Menge bis zu 10 % zugesetzt wird.

7. Verfahren nach einem der Ansprüche 1 bis 6, **dadurch gekennzeichnet, daß** die Stromdichte und/oder die Temperatur kontinuierlich verändert wird/werden.

8. Verfahren nach einem der Ansprüche 1 bis 7, **dadurch gekennzeichnet, daß** die Stromdichte mit einer Rate von 0,1 bis 0,5 A/(dm² min) gesteigert wird.

9. Verfahren nach einem der Ansprüche 1 bis 8, **dadurch gekennzeichnet, daß** die Temperaturen mit einer Rate von 1°C bis 5°C/min verändert werden.

10. Verfahren nach einem der Ansprüche 1 bis 9, **dadurch gekennzeichnet, daß** eine binäre Legierung aus Zinn und Kupfer abgeschieden wird, wobei die Stromdichte im Bereich von 0,5 bis 10 A/dm2 gesteigert wird.

11. Verfahren nach einem der Ansprüche 1 bis 10, **dadurch gekennzeichnet, daß** eine binäre Legierung aus CuAg, AgCu, SnCu, CuSn, SnBi oder SnAg abgeschieden wird.

12. Verfahren nach einem der Ansprüche 1 bis 11, **dadurch gekennzeichnet**, daB ein fluoroboratfreies Galvanikbad verwendet wird.

13. Schichtverbundwerkstoff für Gleitelemente mit einer Trägerschicht, einer Lagermetallschicht, einer Zwischenchicht und einer galvanisch aufgebrachten Gleitschicht,
**dadurch gekennzeichnet,**
**daß** die bleifreie Gleitschicht eine von ihrer Oberfläche in Richtung Lagermetallschicht kontinuierlich zunehmende Härte aufweist.

14. Schichtverbundwerkstoff nach Anspruch 13, **dadurch gekennzeichnet, daß** die Zwischenschicht aus Ni, Ni + SnNi, Co oder Fe besteht, wobei die Legierung SnNi 65 bis 75 % Sn enthält.

15. Schichtverbundwerkstoff nach Anspruch 13 oder 14, **dadurch gekennzeichnet, daß** die Harte im Bereich von 10 HV auf 150 HV ansteigt.

16. Schichtverbundwerkstoff nach einem der Ansprüche 13 bis 15, **dadurch gekennzeichnet, daß** die Gleitschicht aus einer bleifreien binären Legierung mit einer weichen und einer harten Komponente, wie CuAg, AgCu, SnCu, CuSn, SnBi oder SnAg besteht.

17. Schichtverbundwerkstoff nach einem der Ansprüche 13 bis 16, **dadurch gekennzeichnet, daß** der Anteil der harten Komponente von der Gleitschichtoberfäche in Richtung Lagermetallschicht von 1 Gew.-% auf 20 Gew.-% ansteigt.

18. Schichtverbundwerkstoff nach einem der Ansprüche 13 bis 17, **dadurch gekennzeichnet, daß** die Legierung 0,1 Gew.-% bis 5 Gew.-% Nickel und/oder Kobalt enthält.

## Claims

1. Method for the production of a stratified composite material for elements for sliding in which a layer of bearing metal and an intermediate layer are deposited on a substrate layer and a layer for sliding is deposited on the intermediate layer by electroplating, **characterised in that** a lead-free alloy having at least one hard and one soft component is deposited as the layer for sliding, current density being varied during the deposition process in the range 0.3 A/dm² to 20 A/dm² and/or the temperature of the electroplating bath being varied in the range 15° C to 80° C.

2. Method according to claim 1, **characterised in that** temperature is not varied and **in that** current density is increased.

3. Method according to claim 1, **characterised in that** current density is not varied and **in that** temperature is lowered.

4. Method according to claim 1, **characterised in that** a polariser is added to the electroplating bath,**in that** current density is not altered and **in that** temperature is raised.

5. Method according to claim 4, **characterised in that** a polariser based on unsaturated carboxylic acid is added.

6. Method according to claim 4 or 5, **characterised in that** the polariser is added in a quantity of up to 10%.

7. Method according to one of claims 1 to 6, **characterised in that** current density and/or temperature is/are varied continuously.

8. Method according to one of claims 1 to 7, **characterised in that** current density is raised at a rate of 0.1 A/(dm² min) to 0.5 A/(dm² min).

9. Method according to one of claims 1 to 8, **characterised in that** temperature is varied at a rate of 1° C to 5° C/min.

10. Method according to one of claims 1 to 9, **characterised in that** a binary alloy of tin and copper is deposited, current density being raised in the range 0.5 A/dm² to 10 A/dm².

11. Method according to one of claims 1 to 10, **characterised in that** a binary alloy of CuAg, AgCu, SnCu, CuSn, SnBi or SnAg is deposited.

12. Method according to one of claims 1 to 11, **characterised in that** a fluoborate-free electroplating bath is used.

13. Stratified composite material for elements for sliding having a substrate layer, a layer of bearing metal, an intermediate layer and a layer for sliding applied by electroplating, **characterised in that** the lead-free layer for sliding has a hardness which increases continuously from its surface towards the layer of bearing metal.

14. Stratified composite material according to claim 13, **characterised in that** the intermediate layer comprises Ni, Ni + SnNi, Co or Fe, the SnNi alloy containing 65% to 75% Sn.

15. Stratified composite material according to claim 13 or 14, **characterised in that** hardness rises in the range 10 HV to 150 HV.

16. Stratified composite material according to one of claims 13 to 15, **characterised in that** the layer for sliding comprises a lead-free binary alloy having a soft and a hard component, such as CuAg, AgCu, SnCu, CuSn, SnBi or SnAg.

17. Stratified composite material according to one of claims 13 to 16, **characterised in that** the proportion of the hard component rises from the surface of the layer for sliding towards the layer of bearing metal from 1% by weight to 20% by weight.

18. Stratified composite material according to one of claims 13 to 17, **characterised in that** the alloy contains 0.1% by weight to 5% by weight of nickel and/or cobalt.

## Revendications

1. Procédé de fabrication d'un matériau composite stratifié pour éléments de glissement, dans lequel est appliquée sur une couche de support une couche de métal antifriction ainsi qu'une couche intermédiaire, et une couche de glissement est déposée par procédé électrolytique sur la couche intermédiaire,
**caractérisé en ce que**
l'on dépose en tant que couche de glissement un alliage exempt de plomb présentant au moins un composant doux et un composant dur, la densité de courant étant modifiée au sein de la gamme allant de 0,3 à 20 A/dm² pendant le procédé de dépôt et/ou la température du bain électrolytique étant modifiée au sein de la gamme allant de 15 °C à 80 °C.

2. Procédé selon la revendication 1, **caractérisé en ce que** la température n'est pas modifiée et **en ce que** la densité de courant est augmentée.

3. Procédé selon la revendication 1, **caractérisé en ce que** la densité de courant n'est pas modifiée et **en ce que** la température est abaissée.

4. Procédé selon la revendication 1, **caractérisé en ce que** l'on ajoute un polarisant dans le bain électrolytique,
**en ce que** la densité de courant n'est pas modifiée et **en ce que** la température est augmentée.

5. Procédé selon la revendication 4, **caractérisé en ce que** l'on ajoute un polarisant à base d'acide carboxylique insaturé.

6. Procédé selon la revendication 4 ou 5, **caractérisé en ce que** le polarisant est ajouté dans une quantité allant jusqu'à 10 %.

7. Procédé selon l'une des revendications 1 à 6, **caractérisé en ce que** la densité de courant et/ou la température est(sont) modifiée(s) de façon continue.

8. Procédé selon l'une des revendications 1 à 7, **caractérisé en ce que** la densité de courant est augmentée selon une vitesse comprise entre 0,1 et 0,5 A/(dm² min).

9. Procédé selon l'une des revendications 1 à 8, **caractérisé en ce que** les températures sont modifiées selon une vitesse comprise entre 1 °C et 5 °C/min.

10. Procédé selon l'une des revendications 1 à 9, **caractérisé en ce que** l'on dépose un alliage binaire composé d'étain et de cuivre, la densité de courant étant augmentée dans la gamme allant de 0,5 à 10 A/dm².

11. Procédé selon l'une des revendications 1 à 10, **caractérisé en ce que** l'on dépose un alliage binaire composé de CuAg, AgCu, SnCu, CuSn, SnBi ou SnAg.

12. Procédé selon l'une des revendications 1 à 11, **caractérisé en ce que** l'on utilise un bain électrolytique exempt de fluoroborate.

13. Matériau composite stratifié pour éléments de glissement comportant une couche de support, une couche de métal antifriction, une couche intermédiaire et une couche de glissement appliquée par dépôt électrolytique,
**caractérisé en ce que** la couche de glissement exempte de plomb présente une dureté qui augmente en continu depuis sa surface dans la direction de la couche de métal antifriction.

14. Matériau composite stratifié selon la revendication 13, **caractérisé en ce que** la couche intermédiaire se compose de Ni, de Ni + SnNi, de Co ou de Fe, l'alliage SnNi contenant 65 à 75 % de Sn.

15. Matériau composite stratifié selon la revendication 13 ou 14, **caractérisé en ce que** la dureté augmente dans la gamme allant de 10 HV à 150 HV.

16. Matériau composite stratifié selon l'une des revendications 13 à 15, **caractérisé en ce que** la couche de glissement se compose d'un alliage binaire exempt de plomb présentant un composant doux et un composant dur, tel que CuAg, AgCu, SnCu, CuSn, SnBi ou SnAg.

17. Matériau composite stratifié selon l'une des revendications 13 à 16, **caractérisé en ce que** la fraction du composant dur augmente depuis la surface de la couche de glissement dans la direction de la couche de métal antifriction de 1 % en masse à 20 % en masse.

18. Matériau composite stratifié selon l'une des revendications 13 à 17, **caractérisé en ce que** l'alliage contient 0,1 % en masse à 5 % en masse de Nickel et/ou de cobalt.
